# EUROPÄISCHE PATENTSCHRIFT

(11) **EP 1 186 825 B1**
(45) Veröffentlichungstag und Bekanntmachung des Hinweises auf die Patenterteilung: **03.01.2007**
(21) Anmeldenummer: 01120362.7
(22) Anmeldetag: 25.08.2001
(51) Int. Cl.: F16L 55/033

(54) **Vorrichtung zum schalldämpfenden Befestigen von Armaturen**
Device for fastening noise damping fittings
Dispositif pour fixer des pièces anti-bruit de raccordements

(30) Priorität: 05.09.2000 DE 10043543
(43) Veröffentlichungstag der Anmeldung: 13.03.2002
(73) Patentinhaber: Gebr. Kemper GmbH + Co. KG, 57462 Olpe (DE)
(72) Erfinder: Hilchenbach, Gerhard, 57462 Olpe (DE); Stader, Rolf Peter, 53819 Neunkirchen (DE)
(74) Vertreter: Grünecker, Kinkeldey, Stockmair & Schwanhäusser Anwaltssozietät

(56) Entgegenhaltungen:
- DE-A- 3 323 187
- DE-A- 4 324 754
- DE-U- 9 419 817

## Beschreibung

Die Erfindung betrifft eine Vorrichtung zum schalldämpfenden Befestigen von Armaturen, insbesondere Sanitär-, Heizungs- und Lüftungsarmaturen, an einem Mauerwerk, Montageschienen u.dgl.

Eine aus der DE 43 24 754 C2 bekannte schalldämpfende Montagevorrichtung für die Installation von Sanitär-, Heizungs- und Lüftungsarmaturen sowie von Versorgungsleitungen weist eine Befestigungsplatte zur Anbringung an einer Montageschiene oder Wand, einen Armaturenhalter und eine zwischen der Befestigungsplatte und dem Armaturenhalter angeordnete, schallabsorbierende Dämpfungsschicht auf. Durch die Sandwichbauweise werden auftretende Vibrationen in der Dämpfungsschicht absorbiert und auf diese Weise störende Geräusche durch ein die Armaturen durchströmendes, flüssiges oder gasförmiges Medium vermieden. Die Montagevorrichtung ermöglicht die Befestigung von Armaturen und Rohren mit unterschiedlichen Abmessungen an einer Löcher im Rastermaß aufweisenden Montageschiene.

Die Armatur oder Rohrleitung wird mittels Blechschrauben, die senkrecht zur Befestigungsfläche in den als Hohlkörper ausgebildeten Armaturenhalter geschraubt werden, an der Montagevorrichtung befestigt. Diese Befestigungsart hat den Nachteil, daß die Montagevorrichtung für Armaturen mit größeren Gehäusen, z.B. Wasserzählergehäusen oder Gehäusen von Absperrarmaturen, nicht geeignet ist, da aufgrund der verhältnismäßig großen Abmessungen der Gehäuse die Befestigungsschrauben mit herkömmlichen Werkzeugen nicht erreichbar sind. Ferner kann aufgrund der Sandwichbauweise die bekannte Montagevorrichtung größere Drehmomente, die z.B. beim Lösen einer Wasserzähler-Meßkapsel aus einem Armaturengehäuse auftreten, nur durch Kraftschluß übertragen, so daß die Gefahr besteht, daß sich der Armaturenhalter und/oder die Befestigungsplatte von der aufvulkanisierten Dämpfungsschicht löst bzw. lösen.

Die DE-A-33 23 187 beschreibt eine Vorrichtung zur schalldämpfenden Befestigung von Gegenständen, insbesondere von Rohrleitungen. Die Befestigungsvorrichtung besteht aus zwei beidseits eines Bauteils, beispielsweise eines Rohres, angeordneten Befestigungsteilen, die jeweils ein Trägerteil, das als Vierkantrohrsegment ausgebildet ist, zum Anschrauben beispielsweise einer Rohrschelle und zwei beabstandete Befestigungswinkel umfassen. Zwischen zwei Schenkeln der beiden Befestigungswinkel wird mittels eines Spannbolzens ein Trägerteil für die Rohrschelle eingespannt, wobei der Spannbolzen mit Spiel durch entsprechende Bohrungen in den Wänden des Trägerteiles durchgesteckt und zwischen dem Trägerteil und den Schenkeln der beiden Befestigungswinkel jeweils eine Dämmplatte eingefügt wird. Das Trägerteil wird zusätzlich mit einer Spannschraube, die von innen durch das Trägerteil durchgesteckt wird, auf zwei übereinander geschobenen Tragflanschen befestigt, die an den beiden gegenüberliegenden Schenkeln der beiden Befestigungswinkel angeschweißt sind und in den Zwischenraum zwischen den Schenkeln der Befestigungswinkel vorstehen, befestigt, wobei zur Vermeidung einer Schallbrücke zwischen dem Kopf der Spannschraube und der Innenseite des Trägerteils sowie der Außenseite des Trägerteils und den beiden Tragflanschen der gegenüberliegenden Schenkel der beiden Befestigungswinkel zwei weitere Dämmplatten eingespannt werden. Die beiden Befestigungswinkel werden mit rechtwinklig zu den Tragschenkeln für das Trägerteil abgewickelten Schenkeln auf einem Untergrund befestigt.

Diese schalldämpfende Befestigungsvorrichtung für Bauteile unterschiedlicher Art, insbesondere für Rohrleitungen, ist aufgrund der Vielzahl der erforderlichen Einzelteile aufwendig und entsprechend teuer und bedingt eine umständliche und zeitaufwendige Montage. Ein weiterer wesentlicher Nachteil dieser bekannten Befestigungsvorrichtung ist darin zu sehen, daß diese Vorrichtung mit einer Anordnung der Schrauben zum Befestigen von Gegenständen, insbesondere von Rohrleitungen, auf dem Trägerteil des Befestigungsteiles senkrecht zur Befestigungsfläche des Befestigungsteils wie die aus der DE-A-43 24 754 bekannte Befestigungsvorrichtung für Armaturen mit größeren Gehäusen wie Absperrarmaturen nicht geeignet ist, da wegen der verhältnismäßig großen Gehäuseabmessungen die Befestigungsschrauben mit herkömmlichen Werkzeugen schwer zugängig sind.

Der Erfindung liegt die Aufgabe zugrunde, eine Vorrichtung zur einfachen und sicheren Befestigung mit einer wirkungsvollen Schalldämpfung von Armaturen wie Sanität-, Heizungs- und Lüftungsarmaturen mit unterschiedlichen Gehäuseausführungen an einem Mauerwerk, Montageschienen und dergleichen zu entwickeln.

Diese Aufgabe ist erfindungsgemäß gelöst durch eine Befestigungsvorrichtung mit den Merkmalen des Patentanspruchs 1.

Die Unteransprüche beinhalten vorteilhafte und zweckmäßige Weiterbildungen der Erfindung.

Die erfindungsgemäße Befestigungsvorrichtung zeichnet sich durch eine gute Zugängigkeit der parallel zur Befestigungsfläche gerichteten Befestigungsschrauben auch bei großen Armaturengehäusen und eine dadurch bedingte einfache und zeitsparende Montage der Armaturen aus und gewährleistet aufgrund der stabilen Konstruktion die sichere Aufnahme der bei der Montage und Demontage von Armaturen auftretenden Kräfte und Momente.

Die erfindungsgemäße Befestigungsvorrichtung ist nachstehend anhand von Zeichnungsfiguren erläutert, die folgendes darstellen:
- Fig. 1: eine perspektivische Darstellung der Befestigungskonsole der Befestigungsvorrichtung mit einer vormontierten Armatur in Form eines Wasserzählergehäuses, wobei die Haltestege der Konsole mit einer Dämpfungsschicht ausgekleidet sind,
- Fig. 2: eine perspektivische Darstellung der Armatur nach Fig. 1 mit einer an dem Armaturengehäuse angeformten Befestigungsrippe,
- Fig. 3: einen Schnitt nach Linie III-III der Fig. 1,
- Fig. 4: einen Schnitt nach Linie IV-IV der Fig. 1,
- Fig. 5: eine der Fig. 3 entsprechende Schnittdarstellung der Befestigungskonsole mit einer vormontierten Armatur und einem in die Konsole eingesetzten, als U-Profil ausgebildeten Schalldämpfungsprofil,
- Fig. 6: eine perspektivische Darstellung des als U-Profil ausgebildeten Schalldämpfungsprofils und die
- Fig. 7 und 8: Querschnitte zweier weiterer Ausführungsformen der Befestigungskonsole.

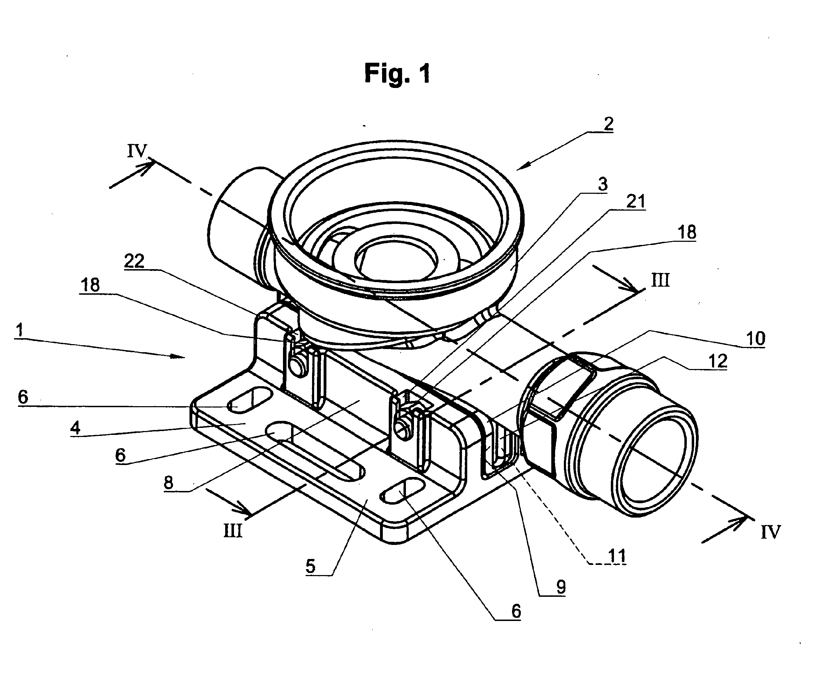

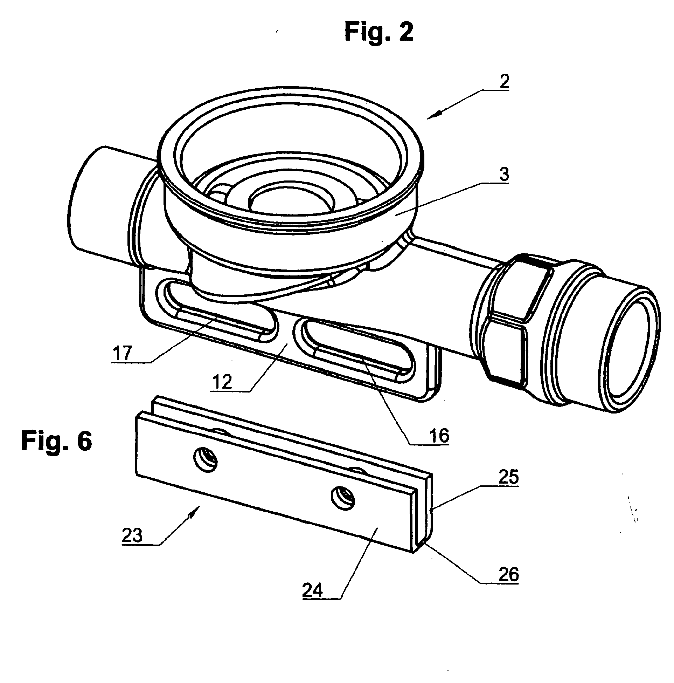

Die Vorrichtung 1 nach den Fign. 1 bis 4 zum schalldämpfenden Befestigen einer Armatur 2, z.B. eines Wasserzählergehäuses 3, an einem Mauerwerk oder einer Montageschiene umfaßt eine Befestigungskonsole 4 aus Kunststoff mit einer Grundplatte 5, die ein Lochbild aus als Langlöcher ausgebildeten Befestigungslöchern 6 aufweist, und mit zwei parallel mit Abstand angeordneten Haltestegen 7, 8, deren Innenseite 9 einen Schalldämpfungsbelag 10 aus einem Elastomer aufweist und die einen Zwischenraum 11 zum formschlüssigen Einsetzen einer an das Wasserzählergehäuse 3 angeformten Befestigungsrippe 12 bilden.

Die Befestigungsrippe 12 des Wasserzählergehäuses 3 wird mit zwei Befestigungsschrauben 13 zwischen den beiden Haltestegen 7, 8 der Befestigungskonsole 4 eingespannt, wobei die Befestigungsschrauben 13 durch jeweils zwei entsprechende, gegenüberliegend angeordnete Schraubenlöcher 14, 14; 15, 15 in den beiden Haltestegen 7, 8 der Befestigungskonsole 4 und durch zwei Langlöcher 16, 17 in der Befestigungsrippe 12 des Wasserzählergehäuses 3 quer zur Befestigungsrippe 12 und zur Vermeidung von Schallbrücken ohne Berührung mit der Befestigungsrippe durchsteckbar sind und mittels auf die Schraubenenden aufschraubbarer Muttern 18 gegen die Haltestege 7, 8 der Befestigungskonsole 4 festziehbar sind.

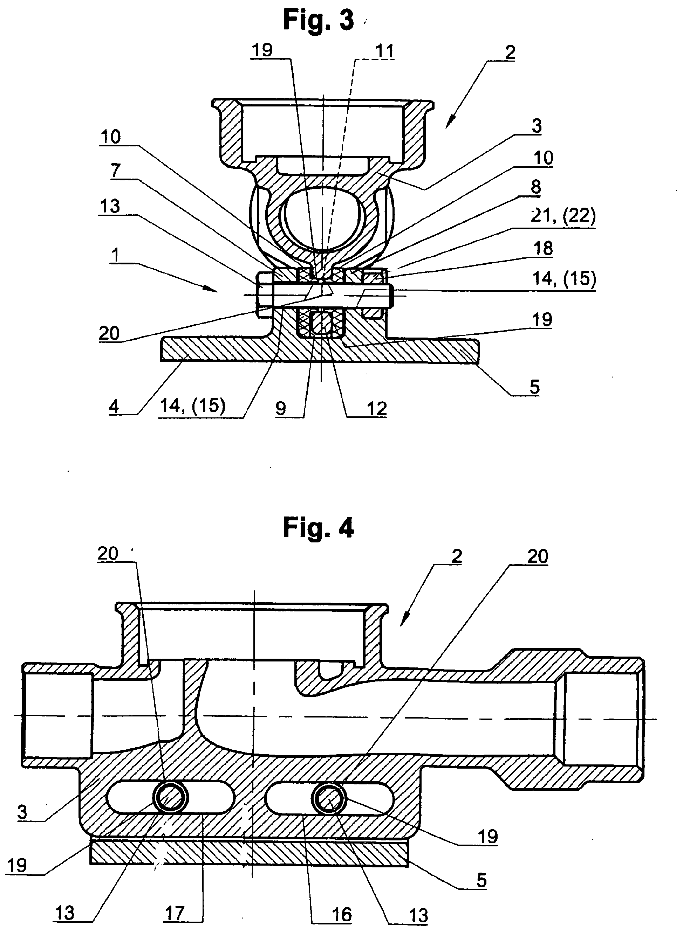

An den Schalldämpfungsbelägen 10 der beiden Haltestege 7, 8 der Befestigungskonsole 4 sind kurze Zentrierstutzen 19 angeformt, die Durchgangslöcher 20 für die Befestigungsschrauben 13 aufweisen und die zur Vermeidung einer Berührung der Befestigungsschrauben 13 mit der Befestigungsrippe 12 des Wasserzählergehäuses 3 in die beiden Langlöcher 16, 17 der Befestigungsrippe 12 eingreifen (Fig. 3).

An den Haltesteg 8 der Befestigungskonsole 4 sind Taschen 21, 22 zur verdreh- und verlustsicheren Aufnahme der auf die Enden der Befestigungsschrauben 13 aufgeschraubten Muttern 18 angeformt (Fig. 1 und 3).

Die Schalldämpfungsbeläge 10 können auf die Innenseite 9 der Haltestege 7, 8 der Befestigungskonsole 4 aufgeklebt oder lose zwischen die Haltestege 7, 8 eingesetzt werden, wobei die Schalldämpfungsbeläge 10 im letzteren Fall vor der Montage einer Armatur durch die Befestigungsschrauben 13 gegen Herausrutschen in der Befestigungskonsole 4 gesichert werden.

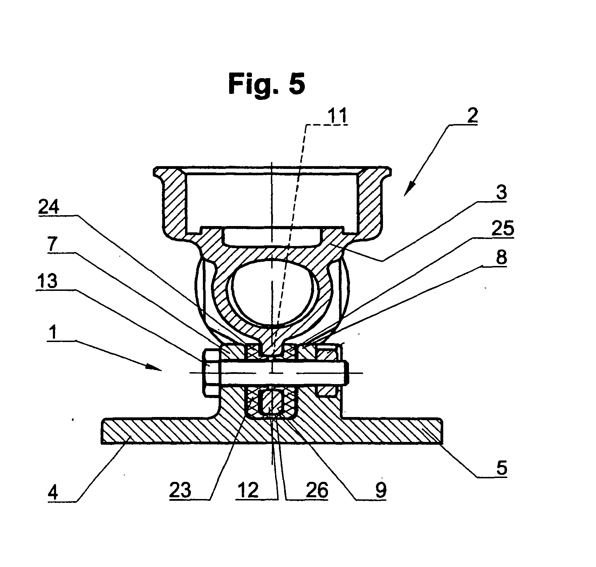

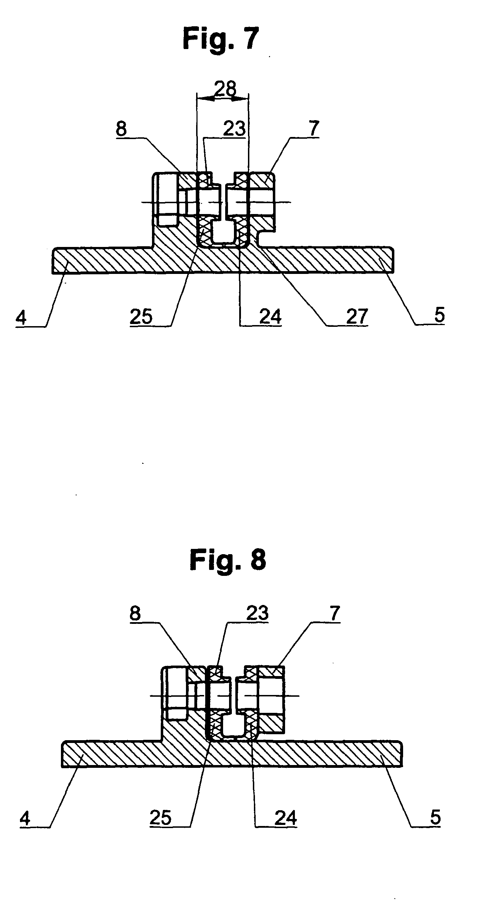

Fig. 5 zeigt eine Befestigungskonsole 4 mit einem zwischen die beiden Haltestege 7, 8 eingelegten, als U-Profil ausgebildeten Schalldämpfungsprofil 23, das in Fig. 6 gesondert dargestellt ist. Das Schalldämpfungsprofil 23 liegt mit seinen beiden Schenkeln 24, 25 an der Innenseite 9 der Haltestege 7, 8 an und liegt mit seinem Verbindungssteg 26 auf der Grundplatte 5 der Befestigungskonsole 4 auf.

Bei der in Fig. 7 dargestellten Ausführungsform der Befestigungskonsole 4 ist einer 7 der beiden Haltestege 7, 8 durch eine Rippe 27 mit einem verringerten Querschnitt mit der Grundplatte 5 verbunden. Beim Anziehen der Befestigungsschrauben 13 kann sich die Rippe 27 plastisch verformen und dadurch der Abstand 28 zwischen den Haltestegen 7, 8 der Befestigungskonsole 4 verringern, so daß Maßtoleranzen bei der Stärke der Befestigungsrippe 12 des Armaturengehäuses und die Kompression der Schalldämpfungsbeläge 10 bzw. der Schenkel 24, 25 des Schalldämpfungsprofils 23 ausgeglichen werden und dadurch eine sichere Befestigung der Armatur an einem Mauerwerk, Montageschienen und dgl. mittels der Befestigungskonsole 4 gewährleistet ist.

Fig. 8 zeigt eine weitere Ausführungsform der Befestigungskonsole 4, bei der einer 7 der beiden Haltestege 7, 8 ein gesondertes Bauteil bildet, das durch die Befestigungsschrauben 13 gehalten wird. Bei dieser Befestigungskonsole 4 wird ein Schalldämpfungsprofil 23 mit U-Querschnitt verwendet, das vor dem Anbringen der Armatur 2 an der Befestigungskonsole 4 auf die Befestigungsrippe 12 des Armaturengehäuses 3 aufgesetzt wird. Durch die Ausbildung des einen Haltesteges 7 der Befestigungskonsole 4 als gesondertes Bauteil spielen Maßtoleranzen und die Kompression der beiden Schenkel 24, 25 des Schalldämpfungsprofil 23 bei der Montage einer Armatur, keine Rolle, so daß die Befestigungskonsole 4 eine sichere Befestigung einer Armatur ermöglicht.

Die Befestigungskonsole 5 wird bevorzugt als Spritzgußteil aus Kunststoff gefertigt, kann aber auch als Spritzgußteil oder Preßteil aus Metall oder aus Buntmetall durch spanabklebende Bearbeitung hergestellt werden.

Bei einer Verwendung von Kunststoff als Herstellungsmaterial besteht die Möglichkeit, die Befestigungskonsole 4 zusammen mit den Schalldämpfungsbelägen 10 bzw. dem Schalldämpfungsprofil 23 mittels eines Zweikomponenten-Spritzgießwerkzeuges zu fertigen.

## Patentansprüche

1. Vorrichtung zum schalldämpfenden Befestigen von Armaturen, insbesondere Sanitär-, Heizungs- und Lüftungsarmaturen an einem Mauerwerk, Montageschienen und dergleichen,
**gekennzeichnet durch**,
eine einzige Befestigungskonsole (4),
eine an einem Armaturengehäuse (3) angeformte oder angebrachte Befestigungsrippe (12) und
ein Material mit schalldämpfenden Eigenschaften,
wobei die Befestigungskonsole (4) eine Grundplatte (5) mit einem Lochbild aus als Lang- und/oder Rundlöchern ausgebildeten Befestigungslöchern (6) und zwei parallel mit Abstand angeordneten Haltestegen (7, 8) aufweist, die einen Zwischenraum (11) zum Einsetzen der Befestigungsrippe (12) ausbilden und von denen zumindest einer der zwei Haltestege (7,8) einteilig mit der Befestigungskonsole (4) ausgebildet ist,
wobei zwischen der Befestigungsrippe (12) und den Haltestegen (7, 8) das Material mit schalldämpfenden Eigenschaften eingebettet ist,
sowie mit mindestens zwei Befestigungsschrauben (13) zum Einspannen der Befestigungsrippe (12) zwischen den beiden Haltestegen (7, 8), wobei die das schalldämpfende Material durchdringenden Befestigungsschrauben (13) **durch** entsprechende Schraubenlöcher (14, 15) in den beiden Haltestegen (7, 8) der Konsole (4) und **durch** mindestens ein Langloch (16) in der
Befestigungsrippe (12) quer zur Befestigungsrippe (12) und zur Vermeidung von Schallbrücken ohne Berührung mit der Befestigungsrippe (12) durchsteckbar und mittels auf die Schraubenenden aufschraubbarer Muttern (18) gegen die Haltestege (7, 8) festziehbar sind.

2. Vorrichtung nach Anspruch 1, **gekennzeichnet durch** in die Befestigungskonsole (4) eingesetzte, von den Befestigungsschrauben (13) gehaltene Schalldämpfungsbeläge (10).

3. Vorrichtung nach Anspruch 1, **gekennzeichnet durch** an die Innenseite (9) der Haltestege (7, 8) der Befestigungskonsole (4) angeklebte Schalldämpfungsbeläge (10).

4. Vorrichtung nach Anspruch 1, **gekennzeichnet durch** ein zwischen den beiden Haltestegen (7, 8) der Befestigungskonsole (4) angeordnetes, als U-Profil ausgebildetes Schalldämpfungsprofil (23), dessen Schenkel (24, 25) an der Innenseite (9) der Haltestege (7, 8) anliegen und die Befestigungsrippe (12) des Armaturengehäuses (3) umfassen.

5. Vorrichtung nach einem der Ansprüche 1 bis 4, **gekennzeichnet durch** an die Schalldämpfungsbeläge (10) bzw. das Schalldämpfungsprofil (23) angeformte, Durchgangslöcher (20) für die Befestigungsschrauben (13) aufweisende, kurze Zentrierstutzen (19), die zur Vermeidung einer Berührung der Befestigungsschrauben (13) mit der Befestigungsrippe (12) des Armaturengehäuses (3) in das bzw. die Langlöcher (16, 17) der Befestigungsrippe (12) eingreifen.

6. Vorrichtung nach einem der Ansprüche 1 bis 5, **dadurch gekennzeichnet, daß** einer (7) der beiden Haltestege (7, 8) der Befestigungskonsole (4) durch eine Rippe (27) mit einem verringerten Querschnitt mit der Grundplatte (5) verbunden ist.

7. Vorrichtung nach einem der Ansprüche 1 bis 5, **dadurch gekennzeichnet, daß** einer (7) der beiden Haltestege (7, 8) der Befestigungskonsole (4) als gesondertes Bauteil ausgebildet ist.

8. Vorrichtung nach einem der Ansprüche 1 bis 7, **gekennzeichnet durch** an einen (7) der beiden Haltestege (7, 8) der Befestigungskonsole (4) angeformte Taschen (21, 22) zur verdreh- und verlustsicheren Aufnahme der auf die Enden der Befestigungsschrauben (13) aufgeschraubten Muttern (18).

9. Vorrichtung nach einem Ansprüche 1 bis 8, **dadurch gekennzeichnet, daß** die Befestigungskonsole (4) aus Kunststoff hergestellt ist.

10. Vorrichtung nach einem der Ansprüche 1 bis 9, **gekennzeichnet durch** die Herstellung der Befestigungskonsole (4) zusammen mit den Schalldämpfungsbelägen (10) bzw. dem Schalldämpfungsprofil (23) mittels eines Zweikomponenten-Spritzgießwerkzeugs.

11. Vorrichtung nach einem der Ansprüche 1 bis 8, **dadurch gekennzeichnet, daß** die Befestigungskonsole (4) aus Metall besteht.

12. Vorrichtung nach Anspruch 11, **dadurch gekennzeichnet, daß** die Befestigungskonsole (4) als Spritzgußteil oder Preßteil aus Metall hergestellt ist.

13. Vorrichtung nach Anspruch 11, **dadurch gekennzeichnet, daß** die Befestigungskonsole (4) aus Buntmetall durch spanabhebende Bearbeitung gefertigt ist.

## Claims

1. Device for sound-deadening attachment of fittings, in particular sanitary, heating and ventilation fittings, to masonry, installation rails and the like,
**characterized by**
a single mounting bracket (4),
a fixing rib (12) formed on, or attached to, a fitting casing (3), and
a material with sound-deadening properties,
wherein the mounting bracket (4) has a base plate (5) with a hole pattern consisting of fixing holes (6) formed as slots and/or round holes and two holding webs (7, 8) arranged parallel and spaced apart which form a gap (11) for the insertion of the fixing rib (12) and of which at least one of the two holding webs (7, 8) is made in one piece with the mounting bracket (4),
wherein the material with sound-deadening properties is embedded between the fixing rib (12) and the holding webs (7, 8),
and with at least two fixing screws (13) for gripping the fixing rib (12) between the two holding webs (7, 8), the fixing screws (13) transfixing the sound-deadening material being insertable through corresponding screw-holes (14, 15) in the two holding webs (7, 8) of the bracket (4) and through at least one slot (16) in the fixing rib (12) at right-angles to the fixing rib (12) and, to prevent sound bridging, without contact with the fixing rib (12), and being tightenable against the holding webs (7, 8) by means of nuts (18) screwed on to the ends of the screws.

2. Device according to Claim 1, **characterized by** sound-deadening linings (10) inserted in the mounting bracket (4) and held by the fixing screws (13).

3. Device according to Claim 1, **characterized by** sound-deadening linings (10) glued to the inside (9) of the holding webs (7, 8) of the mounting bracket (4).

4. Device according to Claim 1, **characterized by** a sound-deadening profiled section (23) configured as a U-section which is arranged between the two holding webs (7, 8) of the mounting bracket (4) and whose arms (24, 25) bear on the inside (9) of the holding webs (7, 8) and clasp the fixing rib (12) of the fitting casing (3).

5. Device according to any one of Claims 1 to 4, **characterized by** short centring muffs (19) which are formed on the sound-deadening linings (10) or sound-deadening profiled section (23) and have through holes (20) for the fixing screws (13) and engage in the slot(s) (16, 17) in the fixing rib (12) of the fitting casing (3) to prevent contact between the fixing screws (13) and the fixing rib (12).

6. Device according to any one of Claims 1 to 5, **characterized in that** one (7) of the two holding webs (7, 8) of the mounting bracket (4) is joined to the base plate (5) by a rib (27) with reduced cross-section.

7. Device according to any one of Claims 1 to 5, **characterized in that** one (7) of the two holding webs (7, 8) of the mounting bracket (4) is made as a separate component.

8. Device according to any one of Claims 1 to 7, **characterized by** pockets (21, 22) formed in one (7) of the two holding webs (7, 8) of the mounting bracket (4) to seat the nuts (18) screwed on to the ends of the fixing screws (13) and secure them against turning or loss.

9. Device according to any one [of] Claims 1 to 8, **characterized in that** the mounting bracket (4) is made of plastic material.

10. Device according to any one of Claims 1 to 9, **characterized by** manufacture of the mounting bracket (4) together with the sound-deadening linings (10) or the sound-deadening profiled section (23) by means of a two-component injection mould.

11. Device according to any one of Claims 1 to 8, **characterized in that** the mounting bracket (4) is made of metal.

12. Device according to Claim 11, **characterized in that** the mounting bracket (4) is made of metal as an injection moulding or compression moulding.

13. Device according to Claim 11, **characterized in that** the mounting bracket (4) is fabricated from non-ferrous metal by machining.

## Revendications

1. Dispositif pour la fixation antibruit d'une robinetterie, en particulier une robinetterie de sanitaire, de chauffage et d'aération, à une maçonnerie, à des rails de montage, etc.,
**caractérisé par** une seule console de fixation (4), une nervure de fixation (12) rapportée ou montée sur une enveloppe de robinetterie (3), et un matériau présentant des caractéristiques insonorisantes,
la console de fixation (4) comportant une plaque de base (5) avec des perforations formées de trous de fixation (6) conçus comme des trous oblongs et/ou ronds et avec deux pattes de fixation (7, 8) espacées et parallèles qui définissent un espace intermédiaire (11) pour l'insertion de la nervure de fixation (12), l'une au moins des deux pattes de fixation (7, 8) étant formée d'une seule pièce avec la console de fixation (4),
le matériau pourvu de caractéristiques insonorisantes étant inséré entre la nervure de fixation (12) et les pattes de fixation (7, 8),
et avec au moins deux vis de fixation (13) pour serrer la nervure de fixation (12) entre les deux pattes de fixation (7, 8), les vis de fixation (13) qui traversent le matériau insonorisant pouvant être introduites dans des trous filetés correspondants (14, 15) des deux pattes de fixation (7, 8) de la console (4) et dans au moins un trou oblong (16) de la nervure de fixation (12), transversalement par rapport à celle-ci, sans contact avec elle afin d'éviter des ponts acoustiques, et pouvant être serrées contre les pattes de fixation (7, 8) à l'aide d'écrous (18) aptes à être vissés sur les extrémités des vis.

2. Dispositif selon la revendication 1, **caractérisé par** des revêtements insonorisants (10) qui sont placés dans la console de fixation (4) et qui sont retenus par les vis de fixation (13).

3. Dispositif selon la revendication 1, **caractérisé par** des revêtements insonorisants (10) qui sont collés sur le côté intérieur (9) des pattes de fixation (7, 8) de la console de fixation (4).

4. Dispositif selon la revendication 1, **caractérisé par** un profilé insonorisant (23) qui est conçu comme un profilé en U, qui est disposé entre les deux pattes de fixation (7, 8) de la console de fixation (4) et dont les branches (24, 25) sont appliquées sur le côté intérieur (9) des pattes de fixation (7, 8) et entourent la nervure de fixation (12) de l'enveloppe de robinetterie (3).

5. Dispositif selon l'une des revendications 1 à 4, **caractérisé par** des tiges de centrage courtes (19) qui sont rapportées sur les revêtements insonorisants (10) ou sur le profilé insonorisant (23), qui présentent des trous de passage (20) pour les vis de fixation (13) et qui pénètrent dans le ou les trous oblongs (16, 17) de la nervure de fixation (12) pour éviter un contact entre les vis de fixation (13) et ladite nervure de fixation (12) de l'enveloppe de robinetterie (3).

6. Dispositif selon l'une des revendications 1 à 5, **caractérisé en ce que** l'une (7) des deux pattes de fixation (7, 8) de la console de fixation (4) est reliée par une nervure (27) à section transversale réduite à la plaque de base (5).

7. Dispositif selon l'une des revendications 1 à 5, **caractérisé en ce que** l'une (7) des deux pattes de fixation (7, 8) de la console de fixation (4) est conçue comme un composant distinct.

8. Dispositif selon l'une des revendications 1 à 7, **caractérisé par** des poches (21, 22) qui sont rapportées sur l'une (7) des deux pattes de fixation (7, 8) de la console de fixation (4) pour recevoir, sans rotation et sans perte, les écrous (18) vissés sur les extrémités des vis de fixation (13).

9. Dispositif selon l'une des revendications 1 à 8, **caractérisé en ce que** la console de fixation (4) est fabriquée en matière plastique.

10. Dispositif selon l'une des revendications 1 à 9, **caractérisé par** la fabrication de la console de fixation (4) avec les revêtements insonorisants (10) ou le profilé insonorisant (23) à l'aide d'un outil de moulage par injection à deux composants.

11. Dispositif selon l'une des revendications 1 à 8, **caractérisé en ce que** la console de fixation (4) est en métal.

12. Dispositif selon la revendication 11, **caractérisé en ce que** la console de fixation (4) est fabriquée sous la forme d'une pièce moulée par injection ou par compression en métal.

13. Dispositif selon la revendication 11, **caractérisé en ce que** la console de fixation (4) est fabriquée en métal non ferreux grâce à un usinage par enlèvement de copeaux.
